# EUROPÄISCHE PATENTSCHRIFT

(11) **EP 3 241 421 B1**
(45) Veröffentlichungstag und Bekanntmachung des Hinweises auf die Patenterteilung: **19.12.2018**
(21) Anmeldenummer: 17401046.2
(22) Anmeldetag: 27.04.2017
(51) Int. Cl.: A01C 21/00, A01C 17/00

(54) **STEUERSYSTEM FÜR EINE LANDWIRTSCHAFTLICHE MASCHINE UND VERFAHREN**
CONTROL SYSTEM FOR AN AGRICULTURAL MACHINE AND METHOD
SYSTÈME DE COMMANDE DE MACHINE AGRICOLE ET PROCÉDÉ

(30) Priorität: 03.05.2016 DE 102016108166
(43) Veröffentlichungstag der Anmeldung: 08.11.2017
(73) Patentinhaber: Amazonen-Werke H. Dreyer GmbH & Co. KG, 49205 Hasbergen (DE)
(72) Erfinder: Wessels, Thomas, 49080 Osnabrück (DE); Große Brinkhaus, Andre, 48149 Münster (DE)

(56) Entgegenhaltungen:
- EP-A1- 0 843 958
- EP-A1- 2 556 738
- EP-A1- 3 017 679
- EP-A2- 1 275 282
- EP-A2- 2 777 376
- DE-A1-102014 102 645

## Beschreibung

Die Erfindung betrifft ein Steuersystem für eine landwirtschaftliche Maschine gemäß dem Oberbegriff des Anspruchs 1 und ein entsprechend ausgebildetes Verfahren.

Die DE 102013103060 A1 zeigt ein Sensorsystem für einen Schleuderstreuer, welches aus einer Mehrzahl von Radarsensoren besteht, welche konzentrisch um das Zentrum einer oder beider Schleuderscheiben des Düngerstreuers angeordnet sind. Die Sensoren dienen zur Erfassung des ausgebrachten Streugutes, so dass aus den Sensordaten auf die Querverteilung des mit der jeweiligen Schleuderscheibe ausgebrachten Gutes, insbesondere den mittleren Abwurfwinkel, zurückgeschlossen werden kann. Die Detektion der Streugutpartikel erfolgt vorzugsweise mittels Radarstrahlen.

Die EP 2 777 376 A2 zeigt ein Verfahren zur Ausbringung von Streugut. Dabei sind funktionale Abhängigkeiten zwischen Einstellparametern des Schleuderstreuers und Abwurfparametern hinterlegt. Mittels Sensoren wird die Ausbringung überwacht und mit einer Regeleinheit werden Ist- und Sollwerte abgeglichen. Bei einer einen Maximalwert übersteigenden Abweichung erfolgt eine Nachregelung der Einstellparameter.

Die nachveröffentlichte DE102014116023 offenbart darüberhinaus einen weiteren Sensor an dem Schleuderstreuer anzubringen, um zusätzlich die Wurfweite des ausgebrachten Streugutes zu ermitteln.

Als Parameter zur Charakterisierung von Streubildern einer Streuscheibe (auch Schleuderscheibe) eignen sich insbesondere die mittlere Wurfweite WW und der mittlere Abwurfwinkel AWW des Düngeraustrags. Diese Werte werden im Stand der Technik für verschiedene Arbeitsbreiten AB und für unterschiedliche Düngersorten in Laborversuchen zur Streutabellenerstellung ermittelt. Je nach Bedingung werden einer oder mehrere dieser Werte an einer Bedienstation zu Beginn des Arbeitsbetriebes eingegeben. Je nach konkreter Umsetzung kann hierbei die Eingabe in Form der Wurfweite und/ oder Wurfrichtung oder entsprechender Kennwerte oder sonstiger Parameter erforderlich sein.

Die mittleren Abwurfwinkel AWW und Wurfweiten WW werden beispielsweise als 50%-Perzentil einer in Umfangsrichtung zum Streuscheibenmittelpunkt gemessenen Abwurfwinkelverteilung beziehungsweise einer radial von der Streuscheibe aus definierten Wurfweiteverteilung des Streubilds ermittelt. Weitere gebräuchliche Parameter sind der Anfangswert AWWa der Abwurfwinkelverteilung als 5%-Perzentil und der zugehörige Endwert AWWe als 95%-Perzentil, ebenso ein Anfangswert WWa der Wurfweiteverteilung als 5%-Perzentil und ein Endwert WWe als 95%-Perzentil. Diese charakteristischen Parameter von Streubildern werden beispielsweise unter reproduzierbaren Bedingungen durch Schalenversuche in Streuhallen für einzelne Düngersorten in Abhängigkeit vom Streuscheibentyp, der Drehzahl und unterschiedlichen Stellungen eines an der Streuscheibe ausgebildeten Einleitsystems für Dünger ermittelt. Die für bestimmte Arbeitsbreiten und Düngersorten unter Standardbedingungen einzustellenden Stellungen und Drehzahlen werden dann üblicherweise in Streutabellen aufgelistet.

Die Steuerung der Verteilung des Schleuderstreuers wird durch ein Steuersystem auf Basis der eingegeben Daten geregelt. Dies können die für den jeweiligen Düngertyp ermittelten Streuparameter sein, die Wurfweite, falls ein entsprechendes Sensorsystem zur Messung der Wurfweite nicht vorliegt, die verwendete Streuscheibe oder sonstige Parameter.

Nachteilig hierbei ist, dass für die jeweils vorliegenden Bedingungen Parameter an das Steuersystem übergeben werden müssen, insbesondere für die jeweils verwendete Düngersorte.

Aufgabe der vorliegenden Erfindung ist es ein Steuersystem und ein Verfahren bereitzustellen, welches die Nachteile des Standes der Technik behebt.

Die Aufgabe wird durch die Merkmale der kennzeichnenden Teile der Ansprüche 1 und 8 gelöst. Mittels einer kurzen Kalibrierfahrt von vorzugsweise nicht mehr als 30 s, besonders bevorzugt nicht mehr als 15 s, werden alle zur Einstellung der Sollarbeitsbreite (GAB) der jeweiligen Streugutsorte spezifischen Einstellparameter, wie Schleuderscheibendrehzahl (DZ1, DZ2) und/oder Aufgabepunkt des Düngers auf die Schleuderscheibe (PE1, PE2) und/oder Schleuderschaufelstellung und/oder Konfiguration einer Grenzstreueinstellung, anhand der Messwerte der Sensoren (6,7) und der eingegebenen Sollarbeitsbreite (GAB) durch das Steuersystem ermittelt und/oder eingestellt. Dies bedeutet, dass lediglich die gewünschte Arbeitsbreite als Sollwert in das Steuersystem eingegeben oder an dieses übergeben wird bzw. dem Steuersystem bekannt sein muss. Alle sonstigen Parameter welche die notwendigen Anpassungen der Schleuderstreuereinstellungen an die jeweils verwendete Düngersorte betreffen, werden durch das Steuersystem mittels eines hinterlegten Regelalgorithmus ermittelt. Hierfür wird neben dem jeweiligen mittleren Abwurfwinkel für jede Schleuderscheibe auch die derzeitige Wurfweite ermittelt. Diese Streuparameter bestimmen für die jeweilige Düngersorte zusammen mit den Eigenschaften der Streuscheibe die tatsächliche Arbeitsbreite des Schleuderstreuers. Je größer die Drehzahl und je größer der Abwurfwinkel, gemessen von einer in Fahrtrichtung liegenden Achse durch die Schleuderscheibe nach außen, desto größer ist auch die tatsächlich erreichte Arbeitsbreite. Aus der ermittelten Wurfweite und dem mittleren Abwurfwinkel lassen sich also mittels eines Regelalgorithmus, welcher zumindest die Schleuderscheibendrehzahl und/oder den Aufgabepunkt des Düngers auf die Schleuderscheibe einstellt, die notwendigen Einstellparameter des Systems ermitteln. Hierfür kann bei bekannter Düngersorte vorzugsweise zur Einstellung einer gewünschten Sollarbeitsbreite die Drehzahl und der Aufgabepunkt des Düngers auf die Schleuderscheibe entsprechend für die jeweilige Düngersorte hinterlegter Algorithmen oder Tabellen eingestellt werden. Wird die gewünschte Wurfweite beispielsweise bei der hinterlegten Drehzahl nicht erreicht, so muss die Drehzahl entsprechend erhöht, wenn dies beispielsweise wegen eine Begrenzung nicht möglich ist, der Aufgabepunkt verändert werden, um die gewünschte Arbeitsbreite einzustellen.

Bei unbekannter Düngersorte sind die einzustellenden Parameter dem Steuersystem a priori unbekannt. Der Schleuderstreuer beginnt daher erfindungsgemäß die Feldarbeit mit einer Standardeinstellung. Die eingestellte Sollarbeitsbreite wird somit zu Beginn des Arbeitsvorganges in der Regel nicht erreicht, sondern es werden je nach verwendeter Düngersorte größere oder kleinere Abweichungen der tatsächlichen Arbeitsbreite von der aktuellen Arbeitsbreite eintreten. Erfindungsgemäß ist nun vorgesehen, dass das Steuersystem mit einem entsprechenden Algorithmus ausgestattet ist, welcher aus dem für jede Schleuderscheibe ermittelten mittleren Abwurfwinkel und der ebenfalls jeweils ermittelten Wurfweite die tatsächliche Arbeitsbreite ermittelt und entsprechende Korrekturen an den Einstellparametern des Schleuderstreuers vornimmt. Hierbei kann es sich vorzugsweise um eine Anpassung der Schleuderscheibendrehzahl und/oder des Aufgabepunktes des Düngers auf die Schleuderscheibe handeln. Entsprechende Anpassungen können sehr schnell nach dem Beginn des Verteilvorganges erfolgen, so dass die gewünschte Sollarbeitsbreite nach kurzer Zeit, vorzugsweise weniger als 30 s, besonders bevorzugt nicht mehr als 15 s, eingestellt ist.

Bei der Verteilung in der Nähe von Hindernissen, Feldgrenzen oder im Vorgewende wird oftmals eine spezielle Vorrichtung verwendet, um eine steil abfallende Streuflanke zu generieren und so eine ausreichende Versorgung mit Streugut an den entsprechenden Orten zu erreichen. Hierbei handelt es sich in der Regel um einen Grenzstreuschirm mit mehreren Lamellen als Leitbleche, welcher in den Düngerstrom hineingeschwenkt wird und automatisch justierbar sein kann. Auch ist bei manchen Schleuderstreuertypen vorgesehen automatisch die Streuschaufelstellung zu verändern. Hierdurch kann der Anstellwinkel der Streuschaufeln verändert und somit das Flugverhalten des Streugutes angepasst werden oder es wird durch Veränderung der Schaufelstellung das Streugut so umgelenkt, dass es über eine andere, zweite Streuschaufel die Schleuderscheibe verlässt. Diese Veränderungen der Verteilcharakteristik in der Nähe von Hindernissen, Feldgrenzen oder im Vorgewende können mit weiteren Änderungen der Schleuderstreuereinstellungen einhergehen: Beispielsweise kann für die reduzierte Wurfweite in der Nähe der Feldgrenze auch eine Mengenreduzierung notwendig sein oder es werden die Drehzahlen einer oder beider Schleuderscheiben angepasst. Insbesondere wird die Drehzahl der Schleuderscheibe auf der Seite des Hindernisses/ der Feldgrenze typischerweise reduziert, so dass die Drehzahlen der Schleuderscheiben welche unter idealen Bedingungen zumindest annähernd gleich sind, hier auch unterschiedlich sein können. Die düngerspezifischen Einstellungen der Vorrichtungen zur Verteilung in der Nähe von Hindernissen oder Feldgrenzen können nun durch das erfindungsgemäße Steuersystem vorgenommen werden, um die gewünschte Verteilcharakteristik herzustellen. Die Information, dass beispielsweise eine Grenzstreusituation vorliegt, kann durch eine Benutzereingabe in das Steuersystem oder durch ein separates System, beispielsweise eine Bearbeitungskarte in Verbindung mit einem Positionserfassungsystem, erfolgen. Alternativ kann eine Grenzstreusituation auch durch das Steuersystem automatisch erkannt werden, beispielsweise falls für die linke Schleuderscheibe eine von der rechten abweichende Sollarbeitsbreite eingegeben wird bzw. bei einer asymmetrisch angeordneten Arbeitsbreite relativ zur Symmetrieachse des Schleuderstreuers.

Da der Regelvorgang bereits nach kurzer Zeit abgeschlossen ist, kann die Kalibrierfahrt gemäß einer vorteilhaften Weiterbildung zu Beginn der Feldarbeit und/oder zu Beginn der Verteilung einer neuen Düngersorte und/oder zu Beginn der Verteilung mit einer angepassten Arbeitsbreite durchgeführt werden und jeweils bereits Teil der Feldarbeit selbst sein. Es kann also bei einer Änderung der Streubedingungen oder zu Beginn des Streuprozesses die Arbeitsfahrt auf dem Feld sofort begonnen bzw. fortgesetzt werden, ohne dass detaillierte Einstellungen an das Steuersystem übergeben werden müssen. Insbesondere bei einem Wechsel der Düngersorte müssen nicht umständlich Einstellparameter aus Tabellen abgelesen und eingegeben werden, so dass der Nachteil, dass die Verteilung zu Beginn des Arbeitsvorganges leichte Abweichungen von der gewünschten Verteilung zeigen kann, durch die Zeitersparnis und den Komfortgewinn des Nutzers des Schleuderstreuers mehr als aufgewogen wird.

In der Erfindung ist der zumindest eine erste Sensor in der Nähe der Schleuderscheibe angeordnet und werden die abgeworfenen Düngerkörner direkt nach dem Abwurf der Düngerkörner von der Schleuderscheibe, vorzugsweise in einem Abstand von nicht mehr als 0,7 m von der Schleuderscheibe, detektiert. Der zumindest eine zweite Sensor ist an der Außenwand des Behälters in der oberen Hälfte angebracht und die Düngerkörner werden von diesem zweiten Sensor in einem weiteren Abstand von der Schleuderscheibe von vorzugsweise mehr als 2 m detektiert. Hierdurch kann besonders vorteilhaft einerseits die Querverteilung der Düngerkörner, insbesondere der mittlere Abwurfwinkel, mittels des ersten Sensors detektiert werden während andererseits mit dem zweiten Sensor die Wurfweite separat ermittelt wird. Der erste Sensor umfasst hierbei vorzugsweise zumindest einen beweglichen Sensor, welcher in Umfangsrichtung konzentrisch zu der jeweiligen Schleuderscheibe, welcher der Sensor zugeordnet ist, verschwenkt werden kann oder mehrere Sensoren als Sensorsystem, welche im Abwurfbereich der jeweiligen Schleuderscheibe des Schleuderstreuers konzentrisch um die Schleuderscheibe stationär angeordnet sind. Diese ersten Sensoren sind in geringem Abstand von der Schleuderscheibe angebracht, da in diesem Bereich die Auffächerung des Streufächers noch nicht so stark ist. Aus den Sensordaten kann die Wurfrichtung, beispielsweise anhand des mittleren Abwurfwinkels ermittelt werden.

Eine Wurfweitenermittlung ist mittels dieses ersten Sensors oder Sensorsystems aufgrund seiner Lage in der Nähe der Schleuderscheiben nur schwer möglich. Der Grund ist einerseits, dass sich in unmittelbarer Nähe der Schleuderscheibe die Flugeigenschaften des Düngers kaum auf die Geschwindigkeit der Partikel ausgewirkt haben. Außerdem werden die Streugutpartikel durch das erste Sensorsystem typischerweise direkt von unten oder oben mit Radarstrahlen beaufschlagt, so dass sich aus den gemessenen Radarstrahlen kein Dopplersignal extrahieren lässt, welches zur Geschwindigkeitsbestimmung in Wurfrichtung, welche annähernd senkrecht zur Ausbreitungsrichtung der Radarstrahlen des ersten Sensorsystems verläuft, geeignet wäre. Zur Wurfweitenermittlung ist daher ein zweiter Sensor oder ein zweites Sensorsystem vorgesehen, welches weiter oben am Schleuderstreuer angebracht ist und die Düngerpartikel derselben Schleuderscheibe zu einem späteren Zeitpunkt der Flugbewegung mit Radarstrahlen beaufschlagt. Zu diesem späteren Zeitpunkt der Flugbewegung haben sich die Flugeigenschaften der Streugutpartikel bereits signifikant auf die Bewegungsgeschwindigkeit ausgewirkt, so dass eine Prognose des weiteren Verlaufes der Flugbahn möglich ist. Zudem ist auf Grund des flacheren Messwinkels im Vergleich zur Flugbahn mit dem zweiten Sensor oder dem zweiten Sensorsystem auch eine Geschwindigkeitsermittlung aus dem Dopplersignal der Radarmessung möglich.

In einer vorteilhaften Weiterbildung der Erfindung ist zusätzlich der Schleuderscheibentyp an das Steuersystem übergebbar und/oder in dieses eingebbar ist und wird dieser bei der Ermittlung der Einstellparameter durch das Steuersystem berücksichtigt. Zwar können Einflüsse von verschiedenen Schleuderscheiben durch das erfindungsgemäße Steuersystem auch automatisch ausgeregelt werden, jedoch sind die Einflüsse, die die Schleuderscheiben auf die Verteilcharakteristik haben vergleichsweise hoch, so dass eine große Abweichung von der gewünschten Verteilcharakteristik zu Beginn der Kalibrierfahrt zu erwarten und/oder eine längere Kalibrierfahrt notwendig ist. Eine Eingabemöglichkeit des Schleuderscheibentyps kann daher vorteilhaft sein, zumal erfahrungsgemäß an den Schleuderstreuern die Schleuderscheibe selten gewechselt wird, so dass die Eingabe eines neuen Schleuderscheibentyps die Ausnahme ist. Zudem wird bei manchen Schleuderstreuern generell nur eine Schleuderscheibe im Betrieb verwendet, sodass es bei diesen Schleuderstreuern bei einer einmaligen Eingabe bleiben kann.

Bei anderen Schleuderstreuern kann es dagegen vorgesehen sein, mehrere Schleuderscheiben zu verwenden. Um die für die jeweilige Schleuderscheibe notwendigen Einstellparameter bereitzustellen, ist nun vorgesehen, dass der Typ der jeweiligen Schleuderscheibe in das Steuersystem eingebbar sind, so dass die schleuderscheibenspezifischen Einstellparameter durch das Steuersystem zu Beginn der Kalibrierfahrt vorbereitend eingestellt werden können. Dies führt zu einer kürzeren Kalibrierfahrt und/oder geringeren Abweichungen von der gewünschten Verteilcharakteristik zu Beginn der Kalibrierfahrt.

In einer alternativen Ausgestaltung der Erfindung wird der Schleuderscheibentyp mittels zumindest eines dritten Sensors vorzugsweise berührungslos ermittelt und dieser dann bei der Ermittlung der Einstellparameter durch das Steuersystem berücksichtigt. Auf diese Weise kann auch die manuelle Eingabe der jeweils verwendeten Schleuderscheibe eingespart werden.

In einer vorteilhaften Weiterbildung der Erfindung wird die aktuelle Ausbringmenge mittels zumindest eines vierten Sensors separat und/oder ergänzend ermittelt, vorzugsweise mittels einer Wiegeeinrichtung zur Bestimmung der im Behälter befindlichen Düngermasse und/oder eines Sensors zur Messung des zum Antrieb der Scheibe notwendigen Drehmomentes und die Ausbringmenge wird bei der Ermittlung der Einstellparameter durch das Steuersystem berücksichtigt. Rückschlüsse über die ausgebrachte Düngermenge lassen sich aus den Messsignalen der ersten und/oder zweiten Sensoren ableiten. Diese Messwerte sind jedoch, was die ausgebrachte Menge anbelangt fehlerbehaftet, beispielsweise weil die empfangenen Signale von den Materialeigenschaften des ausgebrachten Streugutes abhängen. Eine exaktere Bestimmung der Ausbringmenge ist möglich, indem über eine Wiegeeinrichtung die Veränderung der Düngermasse im Vorratsbehälter des Schleuderstreuers direkt erfasst wird.

Alternativ oder zusätzlich kann die Ausbringmenge indirekt erfasst werden, indem das für die Verteilung aufzuwendende Drehmoment der Schleuderscheiben gemessen wird. Die Differenz zwischen dem Leerlaufdrehmoment der Schleuderscheiben und dem aktuell aufzuwendenden Drehmoment ist hierbei proportional zu der ausgebrachten Streugutrate. Die entsprechenden Messsignale können nun vorteilhaft durch das Steuersystem verwendet werden, um eine (exaktere) Regelung der Ausbringmenge bzw. der Ausbringrate zu ermöglichen.

In einer vorteilhaften Weiterbildung der Erfindung wird der Windeinfluss auf die Düngerverteilung mittels eines separaten fünften Sensors bestimmt und/oder die Einstellparameter entsprechend des Windeinflusses durch das Steuersystem angepasst. Der Windeinfluss kann auch aus den gewonnenen Messdaten des ersten und/oder zweiten Sensors ermittelt werden. Insbesondere bei Seitenwind wird eine Abweichung des gemessenen Abwurfwinkels vom Sollabwurfwinkel ermittelt. Jedoch ist der Einfluss auf das Streugut in der Nähe der Streuscheibe, wo sich der erste Sensor oder das erste Sensorsystem befindet begrenzt. Genauer und schneller lässt sich der negative Einfluss von Wind, insbesondere Seitenwind, mittels eines separaten Windsensors, beispielsweise eines Anemometers, bestimmen und direkt durch das Steuersystem berücksichtigen.

In einer vorteilhaften Weiterbildung der Erfindung werden düngerunabhängige Startwerte, welche vorzugsweise arbeitsbreitenabhängig sind, für die Ersteinstellung vor oder beim Beginn der Kalibrierfahrt des Düngerstreuers an das Steuersystem übergeben und/oder in dieses eingegeben. Auf diese Weise können typische Startwerte ermittelt werden, so dass bereits beim Beginn der Kalibrierfahrt und ohne dass die verwendete Düngersorte bekannt ist, eine möglichst gute Übereinstimmung zwischen gewünschter Verteilcharakteristik, insbesondere der Sollarbeitsbreite, und der tatsächlichen Verteilcharakteristik, insbesondere der Istarbeitsbreite, vorliegt. Dies kann beispielsweise dadurch erreicht werden, dass in dem Steuersystem ein mathematischer Zusammenhang, eine Tabelle oder ein Algorithmus hinterlegt ist, welcher einen Zusammenhang zwischen der eingegebenen Sollarbeitsbreite und den einzustellenden Schleuderstreuerparametern, insbesondere Aufgabepunkt und Schleuderscheibendrehzahl, zu Beginn der Kalibrierfahrt herstellt. Diese düngerunabhängigen Startwerte können herstellerseitig ermittelt und in dem Steuersystem abgelegt werden. Die Startwerte können beispielsweise aus Mittelwerten der Schleuderstreuerparameter weit verbreiteter Düngersorten ermittelt werden, Die jeweils optimalen Startwerte werden dann bei der Eingabe der gewünschten Sollarbeitsbreite automatisch aufgerufen.

Die Erfindung stellt zudem ein Verfahren zur Steuerung eines Schleuderstreuers bereit, wobei mittels einer kurzen Kalibrierfahrt von vorzugsweise nicht mehr als 30 s, besonders bevorzugt nicht mehr als 15 s, alle zur Einstellung der Sollarbeitsbreite (GAB) der jeweiligen Streugutsorte spezifischen Einstellparameter anhand der Messwerte der Sensoren (6,7) und der eingegebenen Sollarbeitsbreite (GAB) durch das Steuersystem ermittelt und/oder eingestellt werden. Hierdurch muss lediglich die gewünschte Arbeitsbreite als Sollwert in das Steuersystem eingegeben oder an dieses übergeben werden bzw. dem Steuersystem bekannt sein. Alle sonstigen düngerspezifischen Parameter, also die notwendigen Anpassungen der Schleuderstreuereinstellungen an die jeweils verwendete Düngersorte, werden durch das Steuersystem mittels eines hinterlegten Regelalgorithmus während der Kalibrierfahrt ermittelt.

Hierbei ist bevorzugt der zumindest eine erste Sensor als Radarsensor ausbildet, welcher zumindest einen Parameter der Verteilcharakteristik mittels der Auswertung der Amplitude eines gemessenen Dopplersignals bestimmt. Der zumindest eine zweite Sensor ist bevorzugt ebenfalls als Radarsensor ausgebildet ist, wobei jedoch die Wurfweite mittels der Auswertung der aus der Dopplerfrequenz ermittelten Geschwindigkeit des Streugutes bestimmt wird. Die Frequenz des jeweils ermittelten Radarsignals des ersten Sensors kann beispielsweise dazu verwendet werden, um Störsignale herauszufiltern, während für den zweiten Sensor die gemessene Frequenz des Messsignals aufgrund der Dopplerverschiebung der Frequenz der reflektierten Radarwellen direkt zur Messung der Geschwindigkeit der Düngerkörner herangezogen werden kann.

Weitere vorteilhafte Ausgestaltungen sind den weiteren Unteransprüchen und der Figurenbeschreibung zu entnehmen. Hierbei zeigt
- Fig. 1: einen Schleuderstreuer und den Streufächer des verteilten Streugutes in schematischer Darstellung und
- Fig. 2: die Anpassung der Verteilcharakteristik an die gewünschte Sollarbeitsbreite in schematischer Darstellung.

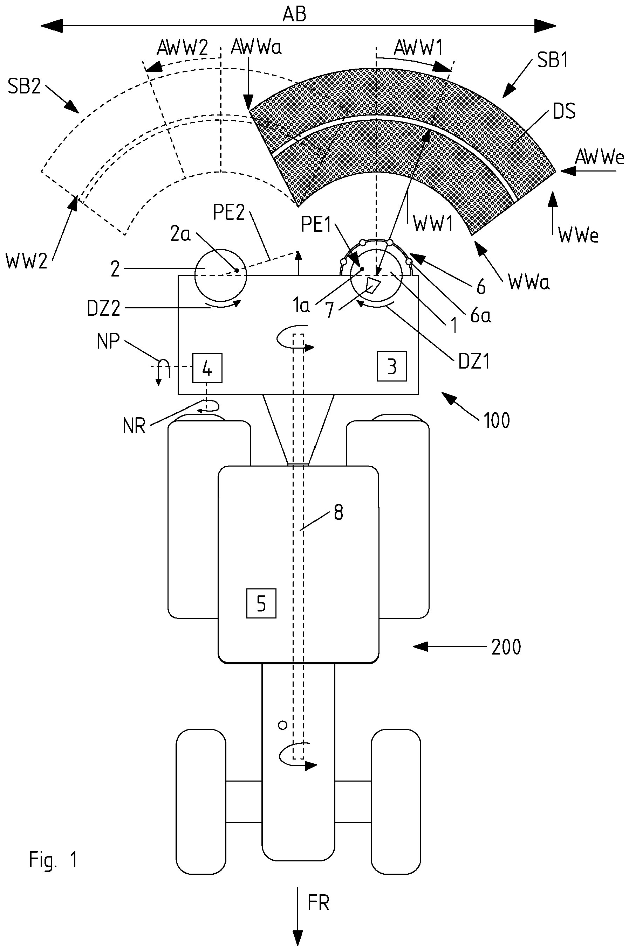

Wie die Fig. 1 erkennen lässt, umfasst der Schleuderstreuer 100 in einer bevorzugten Ausführungsform eine erste Streuscheibe 1 mit einem zugehörigen Einleitsystem 1a für Dünger sowie eine zweite Streuscheibe 2 mit einem zugehörigen Einleitsystem 2a. Die Einleitsysteme 1a, 2a umfassen herkömmliche Dosierungseinrichtungen, wobei die Stellungen PE1, PE2 ihrer Aufgabepunkte bezüglich der Streuscheiben 1, 2 maschinell eingestellt werden können. Die Stellungen PE1, PE2 sind beispielsweise als Positionswinkel bezüglich einer beliebigen Hilfslinie in Drehrichtung der jeweiligen Streuscheibe 1, 2 definiert, gegebenenfalls ferner als radialer Abstand von der Drehachse der jeweiligen Streuscheibe 1, 2.

In der Fig. 1 sind die Einleitsysteme 1a, 2a schematisch anhand ihrer Aufgabepunkte für Dünger dargestellt. Aus Gründen der Übersichtlichkeit ist lediglich die Stellung PE2 des zweiten Einleitsystems 2a beispielhaft durch dessen Positionswinkel angedeutet. Für das Einleitsystem 1a gilt der gleiche Zusammenhang bezogen auf die Drehrichtung der ersten Streuscheibe 1.

Der Schleuderstreuer 100 umfasst ferner eine Steuereinheit 3 zur Steuerung der Streuscheiben 1, 2 und ihrer Einleitsysteme 1a, 2a. Die Steuereinheit 3 ermöglicht wenigstens eine Anpassung der Stellungen PE1, PE2 und insbesondere bei hydraulischem Antrieb der Streuscheiben 1, 2 auch eine Anpassung ihrer Drehzahlen DZ1, DZ2. Bei mechanischem Antrieb der Streuscheiben 1, 2 werden die Drehzahlen DZ1, DZ2 beispielsweise von einem Schlepper 200 aus eingestellt.

Schematisch dargestellt ist ferner eine optionale Neigungsmesseinrichtung 4 zum Messen einer ersten Hangneigung NP in Fahrtrichtung FR und einer zweiten Hangneigung NR orthogonal zur Fahrtrichtung FR.

Ferner ist ein Steuersystem umfassend eine Bedienstation 5, beispielsweise in Form eines Bordrechners oder eines mobilen Rechners, im Bereich eines mit dem Schleuderstreuer 100 verbundenen Schleppers 200 dargestellt. Das Steuersystem und/oder die Bedienstation 5 kann auch am Schleuderstreuer 100 angeordnet sein. Die Bedienstation 5 dient zur Anzeige von Maschinenparametern des Schleuderstreuers 100 und zur Eingabe von wenigstens einer Arbeitsbreite AB für den Düngeraustrag. Das Steuersystem umfasst vorzugsweise auch die Steuereinheit 3. Es kann ferner vorgesehen sein, die Konfiguration einer nicht dargestellten Grenzstreuvorrichtung und die auszubringende Düngermenge in das Steuersystem einzugeben. Die entsprechenden Daten können alternativ auch aus einer hinterlegten Bearbeitungskarte in Kombination mit einem nicht dargestellten Positionserfassungssystem positionsgenau ausgelesen werden.

Im nutzbaren Abwurfwinkelbereich der ersten Streuscheibe 1 ist ein Sensorsystem 6 zum Messen einer Abwurfwinkelverteilung im Wesentlichen quer zur Fahrtrichtung FR ausgebildet. Das Sensorsystem 6 umfasst mehrere ringförmig um die Streuscheibe 1 angeordnete Radarsensoren 6a. Diese senden beispielsweise Radarkeulen aus und detektieren die von den Düngerteilchen reflektierten Radarwellen auf bekannte Weise anhand der Amplitude des ermittelten Dopplersignals, um daraus einen Istwert des Abwurfwinkels AWW1 zu berechnen. Es wären hierzu prinzipiell auch andere Verfahren denkbar, die die weggeschleuderten Düngerteilchen beispielsweise optisch überwachen.

Zusätzlich ist im Bereich der ersten Schleuderscheibe 1 ein Sensor 7 zum Messen einer Wurfweitenverteilung des Düngeraustrags schematisch angedeutet. Auch der Sensor 7 sendet wenigstens eine Radarkeule aus und detektiert die von den Düngerteilchen reflektierten Radarwellen auf bekannte Weise. Daraus lässt sich beispielsweise ein Istwert der Wurfweite WW1 berechnen. Auch an dieser Stelle wären andere Verfahren denkbar, die die weggeschleuderten Düngerteilchen beispielsweise optisch überwachen.

Im Unterschied zu dem Sensorsystem 6, welches in der Nähe der Schleuderscheibe 1 angeordnet ist und das abgeworfene Streugut annähernd senkrecht von unten oder oben mittels Radarstrahlen vermisst, ist der Sensor 7 weiter oben am Schleuderstreuer 100 angeordnet und vermisst das abgeworfene Streugut in größerer Entfernung, vorzugsweise mehr als 2 m, von der Schleuderscheibe 1. Das abgeworfene Streugut wird mit Radarstrahlen beaufschlagt, aus deren Reflexion sich in an sich bekannter Weise mittels der Frequenz des ermittelten Dopplersignals die Geschwindigkeit der Streugutpartikel ermitteln lässt. In der größeren Entfernung von der Schleuderscheibe 1, 2 entfalten die Flugeigenschaften der Streugutpartikel bereits einen Einfluss auf die Bewegung, insbesondere die Geschwindigkeit der Partikel, sodass eine Prognose der Wurfweite WW1 möglich ist. Die für die Schleuderscheibe 1 dargestellten Sensoren bzw. Sensorsystem 6, 7 können in analoger Weise auch für die Schleuderscheibe 2 vorgesehen sein.

Die Streuscheiben 1, 2 werden vom Schlepper 200 mittels einer Antriebskopplung 8 gegenläufig mit vorzugsweise identischen Drehzahlen DZ1, DZ2 gedreht. Die Antriebskopplung 8 kann hydraulisch sein oder mechanisch mittels einer angedeuteter Zapfwelle oder dergleichen. Im Vorgewende und/oder in der Nähe von Feldgrenzen oder Hindernissen können die Streuscheiben 1, 2 auch mit unterschiedlichen Drehzahlen DZ1, DZ2 betrieben werden. Weitere Situationen, beispielsweise bei Seitenwind oder bei der Fahrt am Hang, sind denkbar in denen die Drehzahlen DZ1 und DZ2 unterschiedliche Werte annehmen.

Die Streuscheiben 1, 2 sind bezüglich der Fahrtrichtung FR achsensymmetrisch angeordnet und erzeugen auf einer horizontalen Referenzebene vorzugsweise entsprechend symmetrische Streubilder SB1, SB2. Dies ist in der Fig. 1 lediglich zur Verdeutlichung der charakteristischen Parameter schematisch angedeutet. Jedoch können die Streubilder SB1, SB2 je nach Vorgabe und/oder vorgefundener Topographie auch asymmetrisch ausgebildet sein. Für entsprechende Anpassungen der Istwerte der Abwurfwinkel AWW1, AWW2 an ihre Sollwerte sind die Einleitsysteme 1a, 2a und damit die Aufgabepunkte des Düngers auf die jeweilige Schleuderscheibe daher unabhängig voneinander einstellbar.

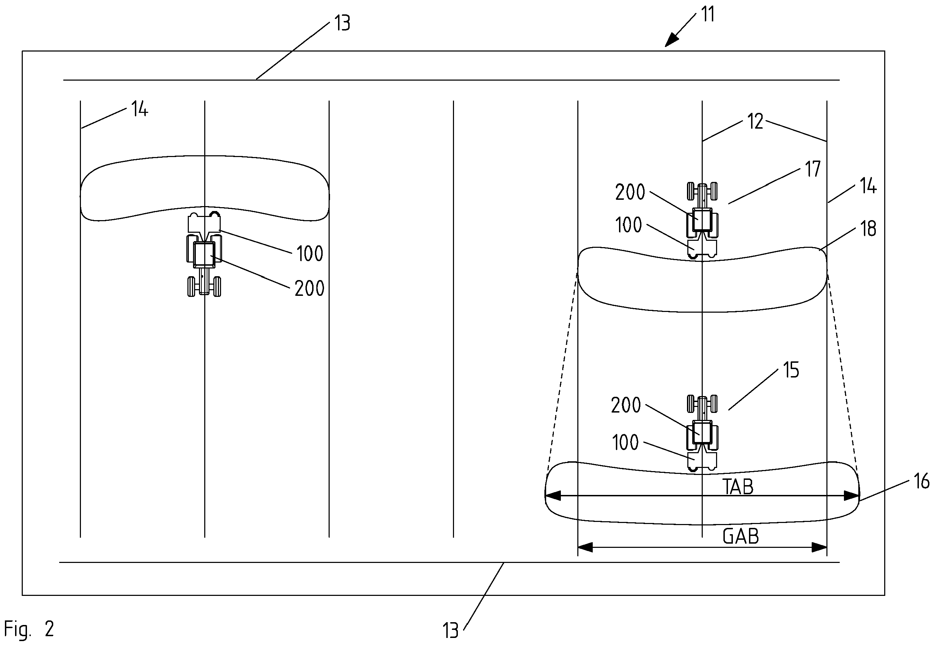

In Fig. 2 dargestellt ist wiederum der Schleuderstreuer 100 angekoppelt an einen Schlepper 200 in verschiedenen Phasen der Feldarbeit auf einer landwirtschaftlichen Fläche 11. Angedeutet sind mehrere Fahrspuren 12, entlang welcher der Schlepper 200 während der Feldarbeit gelenkt wird, so dass das gesamte Feld 11 während des Verteilvorganges gleichmäßig mit Streugut versorgt wird. Um dies zu erreichen wird die gewünschte Arbeitsbreite GAB derart eingestellt, dass der Streufächer auf beiden Seiten bis zur nächsten Fahrspur 12 reicht und durch überlappende Bearbeitung beim Befahren benachbarter Fahrspuren eine gleichmäßige Verteilung erlangt wird.

Das Abfahren der Vorgewendefahrspuren 13 findet typischerweise vor oder nach der übrigen Feldarbeit statt. Die Bearbeitung der Vorgewendefahrspuren 13 erfolgt normalerweise mit einer an die jeweilige Grenzstreusituation angepassten Einstellung einer Grenzstreuvorrichtung, so dass möglichst die gewünschte Streupartikelrate bis an die Feldgrenze heran oder bis zu dem durch die gesetzlichen Richtlinien vorgegebenen Abstand von der Feldgrenze ausgebracht werden kann. Bei dieser Grenzstreuvorrichtung kann es sich beispielsweise um eine spezielle Schleuderschaufel oder Schleuderschaufelstellung oder eine Grenzstreuschirmposition handeln, welche jeweils für eine besondere, auf Grenzstreusituationen angepasste, Verteilcharakteristik sorgt. Analog wird auch entlang der grenznahen Fahrspuren 14 gearbeitet.

Die Ausbringung des Streugutes entlang dieser grenznahen Fahrspuren 13, 14 kann beispielsweise am Ende der Feldarbeit stattfinden, so dass der Verteilvorgang an der Position 15 entlang der der Grenzfahrspur 14 benachbarten Fahrspur begonnen wird. Die gewünschte Ausbringrate wird vor dem Beginn der Verteilung in die Bedienstation 5 eingegeben und an das Steuersystem übermittelt. Ferner wird die gewünschte Arbeitsbreite GAB eingegeben. Die Sollausbringrate kann alternativ aus einer Bearbeitungskarte ausgelesen werden. Auch die gewünschte Arbeitsbreite kann beispielsweise aus der Anordnung und dem Abstand von parallelen Fahrspuren einer Bearbeitungskarte durch die Bedienstation 5 bzw. das Steuersystem ermittelt werden.

Erfindungsgemäß werden nun zu Beginn der Feldarbeit mit dem Schleuderstreuer 100 bezüglich der Drehzahl der Schleuderscheiben DZ1, DZ2 und der Positionen der Einleitsysteme PE1, PE2 zur Steuerung des Aufgabepunktes des Düngers auf die jeweilige Schleuderscheibe 1, 2 für diese Arbeitsbreite in dem Steuersystem hinterlegte Standardwerte eingestellt, welche nicht spezifisch für die verwendete Düngersorte sind. Daher wird im Normalfall zu Beginn der Feldarbeit die Verteilcharakteristik 16 eine tatsächliche Arbeitsbreite TAB aufweisen, welche von der gewünschten Arbeitsbreite GAB abweicht. Diese Abweichung kann anhand des mittels des Sensorsystems 6 ermittelten Abwurfwinkels AWW1, AWW2 und der mittels des Sensors 7 ermittelten Wurfweite WW1, WW2 bestimmt werden und entsprechend kann die gewünschte Arbeitsbreite mittels eines in dem Steuersystem hinterlegten Regelalgorithmus eingeregelt werden. Hierfür wird vorzugsweise eine der Sollarbeitsbreite entsprechende Sollwurfweite und ein entsprechender Sollabwurfwinkel eingeregelt. Die hierfür notwendigen Parameter Drehzahl DZ1, DZ2 und Aufgabepunkt PE1, PE2 sind wegen der unbekannten Streueigenschaften der verwendeten Düngersorte zunächst nicht bekannt. Das Steuersystem regelt nun mittels des hinterlegten Algorithmus vorzugsweise zunächst die Drehzahlen so, dass die gewünschte Sollwurfweite erreicht wird. Ist dies nicht möglich, weil beispielsweise eine Drehzahlbegrenzung dies verhindert, so wird vorzugsweise der Sollwert des Abwurfwinkels derart angepasst, in diesem Fall erhöht/ nach außen verlagert, dass die Sollarbeitsbreite trotz der geringeren Wurfweite erreicht werden kann.

Auf diese Weise wird bereits bei Position 17 die optimale Verteilcharakteristik 18 mit der gewünschten Arbeitsbreite GAB eingestellt. Dieser Prozess kann im Rahmen einer kurzen Kalibrierfahrt von nicht mehr als 30 s, besonders bevorzugt nicht mehr als 15 s zu Beginn der Feldarbeit erfolgen und bereits Teil der Feldarbeit selbst sein. Die Verteilcharakteristik kann hierbei mit nur einem Sensorsystem 6, 7 zur Ermittlung von Wurfweite und Abwurfwinkel einer Schleuderscheibe unter Annahme einer symmetrischen Verteilung bei fehlendem Einfluss von Geländeneigung und Seitenwind oder sonstigen äußeren Einflüssen oder mittels je eines Sensorsystems pro Schleuderscheibe 1, 2 bestimmt werden.

In vorteilhafter Weise kann der Schleuderstreuer 100 auch über ein System zur Erfassung der derzeitigen Ausbringmenge, beispielsweise eine Wiegevorrichtung, und/oder eine Vorrichtung zur Bestimmung des Windeinfluss auf die Streugutverteilung verfügen.

Für die weitere Feldarbeit wird nun wie bekannt die aktuelle Verteilcharakteristik 16 und Arbeitsbreite mit der gewünschten Arbeitsbreite GAB verglichen und permanent nachgeregelt. Für die Arbeit in Grenznähe und im Vorgewende kann nun zusätzlich für die hier gewünschte Arbeitsbreite, die Anpassung einer Grenzstreuvorrichtung mittels des erfindungsgemäßen Steuersystems erfolgen.

## Patentansprüche

1. Steuersystem für einen Schleuderstreuer (100) zur Ausbringung von landwirtschaftlichem Streugut, vorzugsweise Dünger, wobei der Schleuderstreuer über einen Behälter zur Aufbewahrung des Gutes verfügt, wobei das Gut mittels zumindest einer Schleuderscheibe (1, 2) in Breitverteilung ausgebracht wird, wobei die Drehzahl (DZ1, DZ2) der Schleuderscheibe (1, 2) in regelbarer Weise anpassbar ist, wobei die auszubringende Menge des Guts mittels eines Dosierorgans, vorzugsweise eines Dosierschiebers, in regelbarer Weise der zumindest einen Schleuderscheibe (1, 2) zuführbar ist, wobei vorzugsweise zudem der Aufgabepunkt (PE1, PE2) des Düngers auf die zumindest eine Schleuderscheibe (1, 2) in regelbarer Weise anpassbar ist, wobei der Schleuderstreuer (100) ferner über zumindest einen ersten Sensor (6), vorzugsweise Radarsensor, zur berührungslosen Charakterisierung mindestens eines ersten Parameters der Verteilcharakteristik, wie vorzugsweise mittlerer Abwurfwinkel (AWW1, AWW2), des Schleuderstreuers verfügt, wobei der Schleuderstreuer (100) außerdem über zumindest einen zweiten Sensor (7) zur berührungslosen Erfassung der Wurfweite (WW1, WW2) verfügt, wobei in das Steuersystem eine Sollarbeitsbreite (GAB) des Schleuderstreuers als Sollwert übergeben und/oder in dieses eingegeben wird, wobei das Steuersystem konfiguriert ist, Regelparameter die Verteilung betreffend, in Reaktion auf die Messsignale der zumindest zwei Sensoren (6,7) und der gewünschten Arbeitsbreite (GAB) anzupassen,
wobei
mittels einer kurzen Kalibrierfahrt von vorzugsweise nicht mehr als 30 s, besonders bevorzugt nicht mehr als 15 s, alle zur Einstellung der Sollarbeitsbreite (GAB) der jeweiligen Streugutsorte spezifischen Einstellparameter, wie Schleuderscheibendrehzahl (DZ1, DZ2) und/oder Aufgabepunkt des Düngers auf die Schleuderscheibe (PE1, PE2) und/oder Schleuderschaufelstellung und/oder Konfiguration einer Grenzstreueinstellung, anhand der Messwerte der Sensoren (6,7) und der eingegebenen Sollarbeitsbreite (GAB) durch das Steuersystem ermittelt und/oder eingestellt werden,
**dadurch gekennzeichnet, dass**
der zumindest eine erste Sensor (6) in der Nähe der Schleuderscheibe (1, 2) angeordnet ist und die abgeworfenen Düngerkörner direkt nach dem Abwurf der Düngerkörner von der Schleuderscheibe, vorzugsweise in einem Abstand von nicht mehr als 0,7 m von der Schleuderscheibe, detektiert und der zumindest eine zweite Sensor (7) an der Außenwand des Behälters in der oberen Hälfte angebracht ist und die Düngerkörner in einem weiteren Abstand von der Schleuderscheibe (1, 2) von vorzugsweise mehr als 2 m detektiert.

2. Steuersystem nach Anspruch 1, **dadurch gekennzeichnet, dass** die Kalibrierfahrt zu Beginn der Feldarbeit und/oder zu Beginn der Verteilung einer neuen Düngersorte und/oder zu Beginn der Verteilung mit einer angepassten Arbeitsbreite durchgeführt wird und jeweils bereits Teil der Feldarbeit selbst ist.

3. Steuersystem nach zumindest einem der Ansprüche 1 - 2, **dadurch gekennzeichnet, dass** zusätzlich der Schleuderscheibentyp an das Steuersystem übergebbar und/oder in dieses eingebbar ist und dieser bei der Ermittlung der Einstellparameter durch das Steuersystem berücksichtigt wird.

4. Steuersystem nach zumindest Anspruch 3, **dadurch gekennzeichnet, dass** der Schleuderscheibentyp mittels zumindest eines dritten Sensors vorzugsweise berührunglos ermittelt wird und dieser bei der Ermittlung der Einstellparameter durch das Steuersystem berücksichtigt wird.

5. Steuersystem nach zumindest einem der Ansprüche 1 - 4, **dadurch gekennzeichnet, dass** die aktuelle Ausbringmenge mittels zumindest eines vierten Sensors separat und/oder ergänzend ermittelt wird, vorzugsweise mittels einer Wiegeeinrichtung zur Bestimmung der im Behälter befindlichen Düngermasse und/oder eines Sensors zur Messung des zum Antrieb der Scheibe notwendigen Drehmomentes und die Ausbringmenge bei der Einstellung der Dosierschieberstellung durch das Steuersystem berücksichtigt wird.

6. Steuersystem nach zumindest einem der Ansprüche 1 - 5, **dadurch gekennzeichnet, dass** der Windeinfluss auf die Düngerverteilung mittels eines separaten fünften Sensors bestimmt und/oder die Einstellparameter entsprechend des Windeinflusses durch das Steuersystem angepasst wird.

7. Steuersystem nach zumindest einem der Ansprüche 1 - 6, wobei düngerunabhängige Startwerte, welche vorzugsweise arbeitsbreitenabhängig sind, für die Ersteinstellung vor oder beim Beginn der Kalibrierfahrt des Düngerstreuers an das Steuersystem übergebbar und/oder in dieses eingebbar sind.

8. Verfahren zur Steuerung eines Schleuderstreuers (100) zur Ausbringung von landwirtschaftlichem Gut, wobei das Gut mittels einer Schleuderscheibe (1, 2) in Breitverteilung ausgebracht wird, wobei die Drehzahl (DZ1, DZ2) der Schleuderscheibe (1, 2) in regelbarer Weise anpassbar ist, wobei die auszubringende Menge der Schleuderscheibe in regelbarer Weise zuführbar ist, wobei vorzugsweise zudem der Aufgabepunkt des Düngers auf die zumindest eine Schleuderscheibe (PE1, PE2) in regelbarer Weise anpassbar ist, wobei zumindest ein Parameter die Verteilcharakteristik (AWW1, AWW2) des Schleuderstreuers (100) betreffend mittels zumindest eines berührungslos arbeitenden ersten Sensors (6) bestimmbar ist, wobei außerdem mittels zumindest eines zweiten Sensors (7) die Wurfweite (WW1, WW2) berührungslos ermittelt wird, wobei Regelparameter die Verteilung betreffend in Reaktion auf die Messsignale der berührungslos arbeitenden Sensoren (6, 7) und unter Berücksichtigung einer gewünschten Arbeitsbreite (GAB) angepasst werden, wobei
mittels einer kurzen Kalibrierfahrt von vorzugsweise nicht mehr als 30 s, besonders bevorzugt nicht mehr als 15 s, alle zur Einstellung der Sollarbeitsbreite (GAB) der jeweiligen Streugutsorte spezifischen Einstellparameter anhand der Messwerte der Sensoren (6,7) und der eingegebenen Sollarbeitsbreite (GAB) durch das Steuersystem ermittelt und/oder eingestellt werden
**dadurch gekennzeichnet, dass**
der zumindest eine erste Sensor (6) in der Nähe der Schleuderscheibe (1,2) angeordnet ist und die abgeworfenen Düngerkörner direkt nach dem Abwurf der Düngerkörner von der Schleuderscheibe, vorzugsweise in einem Abstand von nicht mehr als 0,7 m von der Schleuderscheibe, detektiert werden und der zumindest eine zweite Sensor (7) an der Außenwand des Behälters in der oberen Hälfte angebracht ist und die Düngerkörner von diesem zweiten Sensor in einem weiteren Abstand von der Schleuderscheibe (1,2) von vorzugsweise mehr als 2 m detektiert werden.

9. Verfahren nach Anspruch 8, **dadurch gekennzeichnet, dass** die Kalibrierfahrt zu Beginn der Feldarbeit und/oder zu Beginn der Verteilung einer neuen Düngersorte und/oder zu Beginn der Verteilung mit einer angepassten Arbeitsbreite durchgeführt wird und jeweils bereits Teil der Feldarbeit selbst ist.

10. Verfahren nach Anspruch 8 oder 9, **dadurch gekennzeichnet, dass** der zumindest eine erste Sensor (6) als Radarsensor ausbildet ist und zumindest einen Parameter der Verteilcharakteristik (AWW1, AWW2) mittels der Auswertung der Amplitude eines gemessenen Dopplersignals bestimmt und der zumindest eine zweite Sensor (7) als Radarsensor ausgebildet ist und die Wurfweite (WW1, WW2) mittels der Auswertung der aus der Dopplerfrequenz ermittelten Geschwindigkeit des Streugutes bestimmt.

11. Verfahren zumindest einem der Ansprüche 8 - 10, **dadurch gekennzeichnet, dass** zusätzlich der Schleuderscheibentyp bei der Ermittlung der Einstellparameter berücksichtigt wird.

12. Verfahren nach zumindest einem der Ansprüche 8 - 11, **dadurch gekennzeichnet, dass** zusätzlich die aktuelle Ausbringmenge separat bestimmbar ist und bei der Einstellung der Dosierschieberstellung berücksichtigt wird.

13. Verfahren nach zumindest einem der Ansprüche 8 - 12, **dadurch gekennzeichnet, dass** der Windeinfluss auf die Düngerverteilung bestimmbar ist und durch Anpassung der entsprechenden Einstellparameter berücksichtigt wird.

14. Verfahren nach zumindest einem der Ansprüche 8 - 13, **dadurch gekennzeichnet, dass** düngerunabhängige Startwerte, welche vorzugsweise arbeitsbreitenabhängig sind, für die Ersteinstellung des Düngerstreuers vor der Kalibrierfahrt vorgesehen sind.

## Claims

1. Control system for a centrifugal spreader (100) for discharging agricultural spreading material, preferably fertilizer, wherein the centrifugal spreader has a container for storing the material, wherein the material is discharged with a broad distribution by means of at least one centrifugal disc (1, 2), wherein the rotational speed (DZ1, DZ2) of the centrifugal disc (1, 2) can be adapted in a controllable fashion, wherein the quantity of the material which is to be discharged can be fed to the at least one centrifugal disc (1, 2) in a controllable fashion by means of a dosing element, preferably of a metering disc, wherein in addition the application point (PE1, PE2) of the fertilizer to the at least one centrifugal disc (1, 2) can preferably be adapted in a controllable fashion, wherein the centrifugal spreader (100) also has at least one first sensor (6), preferably radar sensor, for the contactless characterization of at least one first parameter of the distribution characteristic, such as preferably central ejection angles (AWW1, AWW2) of the centrifugal spreader, wherein the centrifugal spreader (100) also has at least one second sensor (7) for the contactless detection of the throwing distance (WW1, WW2), wherein a setpoint working width (GAB) of the centrifugal spreader is transferred as a setpoint value into the control system and/or is input therein, wherein the control system is configured to adapt control parameters relating to the distribution in reaction to the measurement signals of the at least two sensors (6, 7) and of the desired working width (GAB),
wherein
all the setting parameters which are specific for setting the setpoint working width (GAB) of the respective type of spreading material, such as the centrifugal disc rotational speed (DZ1, DZ2) and/or application point of the fertilizer to the centrifugal disc (PE1, PE2) and/or centrifugal blade position and/or configuration of a limiting spreading setting, by means of a short calibration journey of preferably no longer than 30s, particularly preferably no longer than 15 s, are determined and/or set by the control system on the basis of the measurement values of the sensors (6, 7) and of the input setpoint working width (GAB), **characterized in that**
the at least one first sensor (6) is arranged in the vicinity of the centrifugal disc (1, 2) and detects the ejected grains of fertilizer directly after the ejection of the grains of fertilizer by the centrifugal disc, preferably at a distance of not more than 0.7 m from the centrifugal disc, and the at least one second sensor (7) is attached to the external wall of the container in the upper half and detects the grains of fertilizer at a further distance from the centrifugal disc (1, 2) of preferably more than 2 m.

2. Control system according to Claim 1, **characterized in that** the calibration journey is carried out at the start of the field work and/or at the start of the distribution of a new type of fertilizer and/or at the start of the distribution with an adapted working width, and is in each case already part of the field work itself.

3. Control system according to at least one of Claims 1-2, **characterized in that** the type of centrifugal disc can be additionally transferred to the control system and/or can be input therein, and said type is taken into account by the control system during the determination of the setting parameters.

4. Control system according to at least Claim 3, **characterized in that** the type of centrifugal disc is determined by means of at least one third sensor, preferably in a contactless fashion, and said type is taken into account by the control system during the determination of the setting parameters.

5. Control system according to at least one of Claims 1-4, **characterized in that** the current discharged quantity is determined separately and/or additionally by means of at least one fourth sensor, preferably by means of a weighing apparatus for determining the mass of fertilizer located in the container and/or of a sensor for measuring the torque which is necessary to drive the disc, and the discharged quantity is taken into account by the control system during the setting of the metering slider setting.

6. Control system according to at least one of Claims 1-5, **characterized in that** the influence of the wind on the distribution of the fertilizer is determined by means of a separate fifth sensor and/or the setting parameters are adapted by the control system in accordance with the influence of the wind.

7. Control system according to at least one of Claims 1-6, wherein starting values which are independent of the fertilizer and which are preferably dependent on the working width, for the initial setting can be transferred to the control system and/or can be input therein before or at the start of the calibration journey of the fertilizer spreader.

8. Method for controlling a centrifugal spreader (100) for discharging agricultural material, wherein the material is discharged with a broad distribution by means of a centrifugal disc (1, 2), wherein the rotational speed (DZ1, DZ2) of the centrifugal disc (1, 2) can be adapted in a controllable fashion, wherein the quantity which is to be discharged can be fed to the centrifugal disc in a controllable fashion, wherein in addition the application point of the fertilizer to the at least one centrifugal disc (PE1, PE2) can be preferably adapted in a controllable fashion, wherein at least one parameter relating to the distribution characteristic (AWW1, AWW2) of the centrifugal spreader (100) can be determined by means of at least one contactlessly operating first sensor (6), wherein furthermore the throwing distance (WW1, WW2) is determined in a contactless fashion by means of at least one second sensor (7), wherein control parameters relating to the distribution are adapted in reaction to the measurement signals of the contactlessly operating sensors (6, 7) and taking into account a desired working width (GAB), wherein
all the setting parameters which are specific for setting the setpoint working width (GAB) of the respective type of spreading material by means of a short calibration journey of preferably no longer than 30s, particularly preferably no longer than 15s, are determined and/or set by the control system on the basis of the measurement values of the sensors (6, 7) and of the input setpoint working width (GAB),
**characterized in that**
the at least one first sensor (6) is arranged in the vicinity of the centrifugal disc (1, 2) and the ejected grains of fertilizer are detected directly after the ejection of the grains of fertilizer by the centrifugal disc, preferably at a distance of not more than 0.7 m from the centrifugal disc, and the at least one second sensor (7) is attached to the external wall of the container in the upper half, and the grains of fertilizer are detected by said second sensor at a further distance from the centrifugal disc (1, 2) of preferably more than 2 m.

9. Method according to Claims 8, **characterized in that** the calibration journey is carried out at the start of the field work and/or at the start of the distribution of a new type of fertilizer and/or at the start of the distribution with an adapted working width, and is in each case already part of the field work itself.

10. Method according to Claim 8 or 9, **characterized in that** the at least one first sensor (6) is embodied as a radar sensor and determines at least one parameter of the distribution characteristic (AWW1, AWW2) by means of the evaluation of the amplitude of a measured Doppler signal, and the at least one second sensor (7) is embodied as a radar sensor and determines the throwing width (WW1, WW2) by means of the evaluation of the speed of the spreading material which is determined from the Doppler frequency.

11. Method according to at least one of Claims 8-10, **characterized in that** the type of centrifugal disc is additionally taken into account during the determination of the setting parameters.

12. Method according to at least one of Claims 8-11, **characterized in that** the current discharged quantity can additionally be determined separately and is taken into account during the setting of the metering slider setting.

13. Method according to at least one of Claims 8-12, **characterized in that** the influence of the wind on the distribution of the fertilizer can be determined and is taken into account by adapting the corresponding setting parameters.

14. Method according to at least one of Claims 8-13, **characterized in that** starting values which are independent of the fertilizer and which are preferably dependent on the working width are provided for the initial setting of the fertilizer spreader before the calibration journey.

## Revendications

1. Système de commande pour un épandeur centrifuge (100) pour l'application d'une matière à épandre, de préférence d'engrais, dans lequel l'épandeur centrifuge est muni d'un réservoir pour la conservation de la matière, dans lequel la matière est appliquée en nappe au moyen d'au moins un disque centrifuge (1, 2), dans lequel la vitesse de rotation (DZ1, DZ2) du disque centrifuge (1, 2) peut être adaptée de façon réglable, dans lequel la quantité de matière à appliquer peut être fournie au moyen d'un organe de dosage, de préférence d'un tiroir de dosage, de façon réglable audit au moins un disque centrifuge (1, 2), dans lequel le point de dépôt (PE1, PE2) de l'engrais sur ledit au moins un disque centrifuge (1, 2) peut être adapté de façon réglable, dans lequel l'épandeur centrifuge (100) est en outre muni d'au moins un premier capteur (6), de préférence un capteur radar, pour la caractérisation sans contact d'au moins un premier paramètre de la caractéristique de distribution, comme de préférence l'angle d'éjection moyen (AWW1, AWW2) de l'épandeur centrifuge, dans lequel l'épandeur centrifuge (100) est par ailleurs muni d'au moins un deuxième capteur (7) pour la détection sans contact de la largeur d'éjection (WW1, WW2), dans lequel une largeur de travail de consigne (GAB) de l'épandeur centrifuge est transférée au système de commande et/ou est mémorisée dans celui-ci comme valeur de consigne, dans lequel le système de commande est configuré pour adapter des paramètres de réglage concernant la distribution en réaction aux signaux de mesure desdits au moins deux capteurs (6, 7) et de la largeur de travail désirée (GAB),
dans lequel tous les paramètres de réglage spécifiques pour le réglage de la largeur de travail de consigne (GAB) du type de matière à épandre respectif, comme la vitesse de rotation (DZ1, DZ2) des disques centrifuges et/ou le point de dépôt (PE1, PE2) de l'engrais sur le disque centrifuge et/ou la position des aubes centrifuges et/ou la configuration d'un réglage d'épandage limite, sont détectés et/ou réglés par le système de commande à l'aide des valeurs de mesure des capteurs (6, 7) et de la largeur de travail de consigne mémorisée (GAB) au moyen d'un court trajet de calibrage de préférence de pas plus de 30 s, de préférence encore de pas plus de 15 s,
**caractérisé en ce que** ledit au moins un premier capteur (6) est disposé à proximité du disque centrifuge (1, 2) et détecte les grains d'engrais éjectés directement après l'éjection des grains d'engrais du disque centrifuge, de préférence à une distance de pas plus de 0,7 m du disque centrifuge, et ledit au moins un deuxième capteur (7) est placé sur la paroi extérieure du réservoir dans la moitié supérieure et détecte les grains d'engrais à une plus grande distance du disque centrifuge (1, 2) de préférence de plus de 2 m.

2. Système de commande selon la revendication 1, **caractérisé en ce que** le trajet de calibrage est effectué au début du travail du champ et/ou au début de la distribution d'un nouveau type d'engrais et/ou au début de la distribution avec une largeur de travail adaptée et fait ainsi déjà partie du travail du champ lui-même.

3. Système de commande selon au moins une des revendications 1 à 2, **caractérisé en ce que** le type de disque centrifuge peut en plus être communiqué au système de commande et/ou mémorisé dans celui-ci, et le système de commande en tient compte lors de la détermination des paramètres de réglage.

4. Système de commande selon au moins la revendication 3, **caractérisé en ce que** le type de disque centrifuge est déterminé de préférence sans contact au moyen d'au moins un troisième capteur et le système de commande en tient compte lors de la détermination des paramètres de réglage.

5. Système de commande selon au moins une des revendications 1 à 4, **caractérisé en ce que** la quantité appliquée actuelle est déterminée séparément et/ou en complément au moyen d'au moins un quatrième capteur, de préférence au moyen d'un dispositif de pesage pour la détermination de la quantité d'engrais présente dans le réservoir et/ou d'un capteur pour mesurer le couple nécessaire pour entraîner le disque et le système de commande tient compte de la quantité appliquée lors du réglage de la position du tiroir de dosage.

6. Système de commande selon au moins une des revendications 1 à 5, **caractérisé en ce que** l'influence du vent sur la distribution de l'engrais est déterminée au moyen d'un cinquième capteur séparé et/ou le système de commande adapte les paramètres de réglage en fonction de l'influence du vent.

7. Système de commande selon au moins une des revendications 1 à 6, dans lequel des valeurs de démarrage indépendantes de l'engrais, qui dépendent de préférence de la largeur de travail, pour le premier réglage peuvent être transférées au système de commande et/ou mémorisées dans celui-ci avant ou au début du trajet de calibrage du distributeur d'engrais.

8. Procédé de commande d'un épandeur centrifuge (100) pour l'application de matière agricole, dans lequel on applique la matière en nappe au moyen d'un disque centrifuge (1, 2), dans lequel la vitesse de rotation (DZ1, DZ2) du disque centrifuge (1, 2) peut être adaptée de façon réglable, dans lequel la quantité de matière à appliquer peut être fournie au disque centrifuge de façon réglable, dans lequel de préférence le point de dépôt (PE1,PE2) de l'engrais sur ledit au moins un disque centrifuge peut en outre être adapté de façon réglable, dans lequel au moins un paramètre concernant la caractéristique de distribution (AWW1, AWW2) de l'épandeur centrifuge (100) peut être déterminé au moyen d'au moins un premier capteur opérant sans contact (6), dans lequel la largeur d'éjection (WW1, WW2) est par ailleurs déterminée sans contact au moyen d'au moins un deuxième capteur (7), dans lequel des paramètres de réglage concernant la distribution sont adaptés en réaction aux signaux de mesure des capteurs opérant sans contact (6, 7) et en tenant compte d'une largeur de travail désirée (GAB), dans lequel on détermine et/ou on règle par le système de commande tous les paramètres de réglage spécifiques pour le réglage de la largeur de travail de consigne (GAB) du type de matière à épandre respectif à l'aide des valeurs de mesure des capteurs (6, 7) et de la largeur de travail de consigne mémorisée (GAB), au moyen d'un court trajet de calibrage de préférence de pas plus de 30 s, de préférence encore de pas plus de 15 s,
**caractérisé en ce que** ledit au moins un premier capteur (6) est disposé à proximité du disque centrifuge (1, 2) et on détecte les grains d'engrais éjectés directement après l'éjection des grains d'engrais du disque centrifuge, de préférence à une distance de pas plus de 0,7 m du disque centrifuge, et ledit au moins un deuxième capteur (7) est placé sur la paroi extérieure du réservoir dans la moitié supérieure et on détecte les grains d'engrais au moyen de ce deuxième capteur à une plus grande distance du disque centrifuge (1, 2) de préférence de plus de 2 m.

9. Procédé selon la revendication 8, **caractérisé en ce que** l'on effectue le trajet de calibrage au début du travail du champ et/ou au début de la distribution d'un nouveau type d'engrais et/ou au début de la distribution avec une largeur de travail adaptée et il fait ainsi déjà partie du travail du champ lui-même.

10. Procédé selon la revendication 8 ou 9, **caractérisé en ce que** ledit au moins un premier capteur (6) est un capteur radar et détermine au moins un paramètre de la caractéristique de distribution (AWW1, AWW2) au moyen de l'évaluation de l'amplitude d'un signal Doppler mesuré et ledit au moins un deuxième capteur (7) est un capteur radar et détermine la largeur d'éjection (WW1, WW2) au moyen de l'évaluation de la vitesse de la matière à épandre déterminée par la fréquence Doppler.

11. Procédé selon au moins une des revendications 8 à 10, caractérisé en ce l'on tient en outre compte du type de disque centrifuge lors de la détermination des paramètres de réglage.

12. Procédé selon au moins une des revendications 8 à 11, **caractérisé en ce que** la quantité déposée actuelle peut en outre être déterminée séparément et on en tient compte lors du réglage de la position du tiroir de dosage.

13. Procédé selon au moins une des revendications 8 à 12, **caractérisé en ce que** l'influence du vent sur la distribution de l'engrais peut être déterminée et on en tient compte par adaptation des paramètres de réglage correspondants.

14. Procédé selon au moins une des revendications 8 à 13, **caractérisé en ce que** des valeurs de démarrage indépendantes de l'engrais, qui dépendent de préférence de la largeur de travail, sont prévues pour le premier réglage du distributeur d'engrais avant le trajet de calibrage.
